# FASCICULE DE BREVET EUROPEEN

(11) **EP 2 621 321 B1**
(45) Date de publication et mention de la délivrance du brevet: **14.09.2016**
(21) Numéro de dépôt: 11779756.3
(22) Date de dépôt: 28.09.2011
(51) Int. Cl.: A47J 45/06, A47J 45/07

(54) **POIGNÉE PIVOTANTE A CLIQUET D'ASSEMBLAGE**
SCHWENKGRIFF MIT EINEM MONTAGEHAKEN
PIVOTING HANDLE HAVING AN ASSEMBLY CATCH

(30) Priorité: 01.10.2010 FR 1057989
(43) Date de publication de la demande: 07.08.2013
(73) Titulaire: SEB S.A., 69130 Ecully (FR)
(72) Inventeur: RHETAT, Eric, F-21000 Dijon (FR); MURAT, Pascal, Roland, Clément, F-21121 Fontaine Les Dijon (FR)
(74) Mandataire: Martin, Didier Roland Valéry
(86) Numéro de dépôt international: PCT/FR2011/052268
(87) Numéro de publication internationale: WO 2012/042174

(56) Documents cités:
- EP-A1- 1 800 581
- GB-A- 190 906 841
- JP-A- 2008 212 632
- US-A1- 2005 184 079
- US-A1- 2007 119 856
- US-A1- 2008 179 211
- US-B1- 6 220 477

## Description

### DOMAINE TECHNIQUE

La présente invention se rapporte au domaine général des récipients de cuisine de toutes sortes destinés à être utilisés pour la préparation ou la cuisson d'aliments, et plus particulièrement des récipients pourvus d'une ou plusieurs poignées pivotantes.

La présente invention concerne également une poignée pivotante pour récipient de cuisine, ladite poignée comprenant une embase de fixation permettant sa fixation sur la paroi du récipient, ainsi qu'un organe de préhension qui est monté sur ladite embase de fixation de sorte à pouvoir pivoter dans un secteur angulaire qui contient au moins un secteur angulaire fonctionnel compris entre une première position angulaire de préhension, dans laquelle l'organe de préhension permet à un utilisateur de manipuler le récipient, et une seconde position angulaire de rangement distincte de la première position angulaire.

### TECHNIQUE ANTERIEURE

Il est connu d'équiper des récipients de cuisine, tels que des plats, des sauteuses, ou des autocuiseurs d'une ou plusieurs poignées pivotantes susceptibles d'occuper alternativement une position relevée, dans laquelle elles s'étendent dans le prolongement radial du récipient pour permettre la manipulation de ce dernier, et une position de repos dans laquelle elles sont rabattues afin de limiter l'encombrement du récipient et d'en faciliter le nettoyage et le rangement.

De telles poignées comportent généralement une anse montée en pivot sur une embase de fixation elle-même attachée à la paroi du récipient.

Si elles présentent d'indéniables avantages en matière d'ergonomie, de telles poignées pivotantes sont toutefois susceptibles de présenter certains inconvénients.

En particulier, elles peuvent parfois compliquer les opérations d'assemblage du récipient dans la mesure où il est nécessaire, lorsque l'on rapporte l'embase de fixation contre la paroi du récipient, de positionner l'anse dans une position qui permet d'une part de placer et d'orienter convenablement l'embase à un emplacement précis sur la paroi du récipient, d'autre part d'accéder aux moyens de fixation de l'embase, par exemple une ou plusieurs vis, et enfin d'éviter toute séparation accidentelle de l'anse et de ladite embase pendant l'opération.

Or, une telle opération peut être singulièrement compliquée par l'instabilité de l'anse, et exige de l'opérateur chargé de l'assemblage qu'il procède avec soin et précision, en maintenant manuellement les différents éléments, sous peine de provoquer le déplacement, voire le détachement et la chute de l'anse ou le mauvais positionnement global la poignée par rapport au récipient tant que la poignée n'est pas effectivement solidarisée au récipient.

Elle peut éventuellement requérir l'utilisation d'un outillage de positionnement et d'immobilisation relativement complexe, et par conséquent coûteux.

En tout état de cause, de telles contraintes tendent à réduire la cadence de la chaîne d'assemblage et à augmenter le risque de défaillance, et par conséquent, le taux de rebut.

En outre, elles compliquent l'organisation de la chaîne d'assemblage au niveau de la préparation et de l'approvisionnement des pièces, dans la mesure où l'assemblage doit être réalisé sur un poste unique, dans la mesure où il est difficile de réaliser, en amont du poste d'assemblage, un sous-ensemble stable comprenant à la fois l'embase et la poignée pour ensuite rapporter ledit sous-ensemble simultanément sur le récipient.

Les documents US-2007/0119856 A1, US-2008/0179211 et GB-06841 A divulguent des récipients de cuisine équipés d'une poignée pivotante.

### EXPOSE DE L'INVENTION

Les objets assignés à la présente invention visent par conséquent à remédier aux inconvénients susmentionnés et à proposer une nouvelle poignée pivotante pour récipient de cuisine qui facilite et qui sécurise les opérations d'assemblage de ladite poignée et du récipient qu'elle équipe, tout en conférant à ladite poignée et audit récipient une excellente ergonomie et un fonctionnement intuitif.

Un autre objet assigné à l'invention vise à proposer une nouvelle poignée pivotante pour récipient de cuisine dont le fonctionnement soit particulièrement franc et sûr.

Un autre objet assigné à l'invention vise également à proposer une nouvelle poignée pivotante dont la structure soit particulièrement simple, compacte, légère, et peu onéreuse à fabriquer.

Un autre objet assigné à l'invention vise à proposer une nouvelle poignée pivotante présentant une bonne stabilité et une grande robustesse, notamment lorsqu'elle se trouve en position de préhension.

Un autre objet assigné à l'invention vise à proposer une nouvelle poignée pivotante qui présente un bon aspect esthétique et qui soit peu vulnérable aux agressions extérieures, notamment aux salissures et aux projections.

Un autre objet assigné à l'invention vise à proposer une nouvelle poignée pivotante dont le fonctionnement soit particulièrement durable, reproductible et fiable.

Un autre objet assigné à l'invention vise à proposer une nouvelle poignée pivotante dont la pose comme la dépose soient particulièrement simples et faciles à contrôler par l'opérateur.

Un autre objet assigné à l'invention vise à proposer un nouveau récipient de cuisine dont l'assemblage et l'ergonomie soient optimisés.

Enfin, un autre objet assigné à l'invention vise à proposer un nouveau procédé d'assemblage de poignées pivotantes sur un récipient de cuisine qui soit simple, rapide, fiable et reproductible.

Les objets assignés à l'invention sont atteints à l'aide d'une poignée pivotante pour récipient de cuisine, ladite poignée comprenant une embase de fixation permettant sa fixation sur la paroi du récipient, ainsi qu'un organe de préhension qui est monté sur ladite embase de fixation de sorte à pouvoir pivoter dans un secteur angulaire contenant au moins un secteur angulaire fonctionnel compris entre une première position angulaire de préhension, dans laquelle l'organe de préhension permet à un utilisateur de manipuler le récipient, et une seconde position angulaire de rangement distincte de la première position angulaire, ladite poignée étant caractérisée en ce qu'elle comporte des moyens de capture conçus pour engager l'organe de préhension alors que ce dernier se trouve dans une position angulaire de capture située en dehors ou en limite du secteur angulaire fonctionnel, lesdits moyens de capture étant agencés pour définir d'une part un sens passant selon lequel ils autorisent l'organe de préhension à franchir librement la position angulaire de capture en direction du secteur fonctionnel, et d'autre part un sens bloquant selon lequel ils empêchent ledit organe de préhension de s'éloigner du secteur fonctionnel au-delà de ladite position angulaire de capture.

Les objets assignés à l'invention sont également atteints à l'aide d'un récipient de cuisine pourvu d'une telle poignée.

Les objets assignés à l'invention sont enfin atteints à l'aide d'un procédé d'assemblage d'une poignée pivotante sur un récipient de cuisine, ledit procédé comportant une étape (a) de constitution de poignée pivotante au cours de laquelle on réalise une poignée en montant un organe de préhension sur une embase de fixation destinée à permettre la fixation de la poignée sur le récipient, de telle sorte que ledit organe de préhension puisse pivoter dans un secteur angulaire contenant au moins un secteur angulaire fonctionnel compris entre une première position angulaire de préhension, correspondant à une position dans laquelle l'organe de préhension permet à un utilisateur de manipuler le récipient, et une seconde position angulaire de rangement distincte de la première position angulaire, ledit procédé étant caractérisé en ce que ladite étape de constitution de poignée comprend au moins une sous étape (a1) d'insertion au cours de laquelle on rapporte ledit organe de préhension sur l'embase dans une position angulaire d'introduction située en dehors du secteur angulaire fonctionnel, puis d'une sous-étape (a2), de capture au cours de laquelle on bascule l'organe de préhension dans un sens passant en direction dudit secteur angulaire fonctionnel, jusqu'à franchir une position angulaire de capture, elle-même située en limite ou en dehors dudit secteur angulaire fonctionnel et depuis laquelle des moyens de capture empêchent le retour dudit organe de préhension vers sa position angulaire d'introduction.

### DESCRIPTIF SOMMAIRE DES DESSINS

D'autres objets, caractéristiques et avantages de l'invention apparaîtront plus en détails à la lecture de la description qui suit, ainsi qu'à l'aide des dessins annexés, fournis à titre illustratif et non limitatif, parmi lesquels :
- La figure 1 représente, selon une vue en perspective partielle, un récipient de cuisine pourvu d'une poignée conforme à l'invention.
- La figure 2 illustre, selon une vue en perspective éclatée, la poignée pivotante représentée sur la figure 1.
- Les figures 3A, 3B et 3C représentent respectivement, selon une vue d'ensemble en perspective, selon une vue en perspective avec arrachement de matière, et selon une vue partielle en coupe de coté, la poignée pivotante des figures 1 et 2 lorsque l'organe de préhension accoste l'embase en position d'introduction, lors de la première phase de l'assemblage.
- La figure 4 illustre, selon une vue en perspective avec arrachement de matière, la poignée des figures 1 à 3C dans une seconde phase d'assemblage au cours de laquelle l'organe de préhension pénètre progressivement dans l'embase en glissant vers sa position fonctionnelle.
- Les figures 5A et 5B illustrent, selon une vue en perspective avec arrachement de matière et une vue en coupe de coté, la poignée pivotante des figures 1 à 4 lorsque l'organe de préhension achève son mouvement d'introduction et vient buter contre le palier ménagé dans l'embase pour autoriser sa rotation.
- Les figures 6A et 6B illustrent, selon une vue en perspective avec arrachement de matière et une vue en coupe de coté, la poignée des figures 1 à 5B dont l'organe de préhension est basculé dans sa position de capture.
- Les figures 7 et 8 illustrent, selon des vues partielles en coupe de coté, la poignée des figures 1 à 6B au cours du redressement de l'organe de préhension depuis sa position de rangement vers sa position de préhension, ainsi que l'effacement des moyens de capture dans ce sens passant.
- La figure 9 illustre, selon une vue en coupe de coté, la poignée des revendications 1 à 8 verrouillée en position de préhension.
- La figure 10 illustre, selon une vue en coupe de coté, la poignée de la figure 9 déverrouillée par l'utilisateur afin d'autoriser son rabattement en position de rangement.

### MEILLEURE MANIERE DE REALISER L'INVENTION

La présente invention concerne une poignée pivotante 1 de récipient de cuisine 2, susceptible d'être adaptée sans restriction à de nombreux types de récipients destinés à la préparation, à la présentation ou à la cuisson des aliments, tels que plats, sauteuses, casseroles, poêles, faitouts, marmites ou autocuiseurs, etc.

Le récipient 2 peut être pourvu d'au moins une poignée pivotante 1, et, selon une variante de réalisation préférentielle, d'au moins une paire de poignées pivotantes agencées de façon diamétralement opposée sur la partie supérieure de la paroi 4, de préférence sensiblement verticale, dudit récipient 2.

A cet effet, la poignée 1 comprend une embase de fixation 3 qui permet de la fixer sur ladite paroi 4.

De préférence, l'embase 3 présentera au moins une face d'appui 3A, ici dorsale, destinée à venir en appui surfacique stable contre la paroi 4, la fixation de la poignée 1 au récipient intervenant préférentiellement sans qu'il soit nécessaire de percer ni de traverser ladite paroi 4.

Avantageusement, l'embase 3 sera rapportée et assemblée sur la paroi 4 de façon démontable, par exemple au moyen d'une vis de fixation 7 venant en prise dans une bride filetée (non représentée) qui fait saillie sur la paroi 4 et qui peut être par exemple rapportée par soudage sur cette dernière, ladite vis de fixation 7 permettant ainsi de plaquer et d'immobiliser l'embase 3 contre ladite paroi 4.

Le récipient 2 pourra bien entendu être de forme quelconque, la paroi 4 pouvant notamment s'élever depuis un fond 2A en s'enroulant suivant à contour fermé C autour d'un axe générateur, lequel correspond de préférence à la direction verticale (ZZ') et pourra être assimilé à celle-ci dans ce qui suit. Ladite paroi 4 pourra ainsi former sensiblement un cylindre dont la base, délimitant le fond 2A du récipient, pourra être par exemple sensiblement circulaire, ovale, polygonale, etc.

Par ailleurs, la poignée 1 comporte au moins un organe de préhension 5, dont la forme n'est, bien entendu, nullement limitée, dès lors que ce dernier permet la saisie de la poignée en vue de la manipulation du récipient 2.

Ainsi, selon une variante de réalisation non représentée, l'organe de préhension 5 pourra être formé par un manche, qui pourra être allongé et sensiblement rectiligne ou au contraire incurvé.

De préférence, tel que cela est représenté sur les figures, ledit organe de préhension 5 sera formé par une anse 6, présentant de préférence à ses extrémités 6A, 6B des renflements, par exemple sensiblement cylindriques, ladite anse étant avantageusement reliée par chacune desdites extrémités 6A, 6B à l'embase 3, de part et d'autre de cette dernière, en dessinant ainsi, avec ladite embase, un contour sensiblement fermé, par exemple annulaire ou ellipsoïde.

Selon l'invention, l'organe de préhension 5 est monté sur l'embase 3 de sorte à pouvoir pivoter dans un secteur angulaire principal α₀ qui contient au moins un secteur angulaire fonctionnel α_{F} qui est lui-même compris entre une première position angulaire de préhension P_{P}, dans laquelle l'organe de préhension 5 permet à un utilisateur de saisir et de manipuler le récipient, et une seconde position angulaire de rangement P_{R} distincte de ladite première position angulaire de préhension.

Avantageusement, l'organe de préhension 5 pourra donc occuper alternativement une position de préhension dans laquelle il est sensiblement déployé radialement par rapport à l'axe générateur (ZZ') du récipient, et de préférence solidement verrouillé en position fixe par rapport à l'embase 3 de sorte à fournir une prise accessible, solide et sûre du récipient 2, et une position de rangement P_{R} sensiblement non radiale, dans laquelle ledit organe de préhension est rabattu pour réduire l'encombrement hors-tout de la poignée 1, et plus globalement du récipient, afin de faciliter la mise au lave-vaisselle ou le rangement de ce dernier.

Bien entendu, la configuration de la poignée, et plus particulièrement l'orientation de l'axe de pivotement (XX') ne sont nullement limitées.

En particulier, il est envisageable, selon une variante de réalisation non représentée, que le pivotement puisse s'opérer autour d'un axe vertical, de telle sorte que la trajectoire de l'organe de préhension soit sensiblement contenue dans un plan horizontal, et que ledit organe de préhension 5 puisse évoluer d'une première position où il se trouve sensiblement « *en drapeau »* orthogonalement par rapport à la paroi 4, jusqu'à une seconde position dans laquelle il est rabattu de façon sensiblement tangentielle par rapport au contour C de ladite paroi 4.

Toutefois, le pivotement s'opèrera de préférence autour d'un axe (XX') sensiblement horizontal, et préférentiellement sensiblement tangent au contour C, de telle sorte que lorsque l'organe de préhension 5 est placé dans sa position angulaire de rangement P_{R}, il pend sensiblement verticalement le long de la paroi 4, tandis que lorsqu'il occupe sa première position angulaire de préhension P_{P}, il est sensiblement redressé de telle sorte que l'anse 6 s'étende, depuis l'embase 3 vers son extrémité libre, sensiblement le long d'un plan horizontal ou légèrement ascendant, et par exemple selon une direction sensiblement comprise entre -10 degrés sur le plan horizontal et +20 degrés à +30 degrés au-dessus du plan horizontal.

Par commodité de description, on notera (YY') l'axe, ici sensiblement parallèle au rayon du récipient passant par le milieu de l'embase 3, qui forme avec l'axe de pivotement (XX') et l'axe vertical (ZZ') un trièdre direct, dont il définit l'une des directions du plan horizontal.

Selon une caractéristique importante de l'invention, la poignée 1 comporte des moyens de capture 10 qui sont conçus pour engager l'organe de préhension 5 alors que ce dernier se trouve dans une position angulaire de capture P_{C} située en dehors du secteur angulaire fonctionnel α_{F} ou en limite dudit secteur angulaire fonctionnel, lesdits moyens de capture 10 étant agencés pour définir d'une part un sens passant S1 selon lequel lesdits moyens de capture autorisent l'organe de préhension 5 à franchir librement la position angulaire de capture P_{C} en direction du secteur fonctionnel α_{F}, et d'autre part un sens bloquant S2 opposé selon lequel ils empêchent ledit organe de préhension 5 de s'éloigner du secteur fonctionnel α_{F} au-delà de ladite position angulaire de capture P_{C}.

Avantageusement, la mise en oeuvre de moyens de capture 10 conformes à l'invention, intégrés à la poignée 1, permet de pré-constituer la poignée pivotante 1 en assemblant l'organe de préhension 5 sur l'embase 3, avant de rapporter le sous-ensemble ainsi formé contre la paroi 4 du récipient 2.

Les moyens de capture 10 permettent en effet de contrôler sensiblement le pré-positionnement de l'anse 6 par rapport à l'embase, et de maintenir ladite anse sensiblement dans un secteur angulaire compatible avec les opérations de montage de la poignée 1 sur la cuve.

Plus particulièrement, une fois passés et engagés les moyens de capture 10, l'organe de préhension 5 sera alors cantonné dans une position, ou une plage de positions, dans laquelle d'une part il n'interfère pas avec la paroi 4 du récipient lors de la phase d'approche et de maintien de l'embase 3 portant l'anse 6 contre ladite paroi 4, et d'autre part il dégage l'espace nécessaire à l'accès et à la manoeuvre de la vis de fixation 7 lors de la phase d'arrimage.

*A fortiori,* les moyens de capture 10 procurent une butée anti-retour qui empêche ou contribue à empêcher la séparation accidentelle de l'organe de préhension 5 et de l'embase 3.

Avantageusement, les moyens de capture 10 conformes à l'invention permettent donc d'associer une fonction anti-retour au franchissement d'une position de capture P_{C} prédéterminée, lesdits moyens de capture se déclenchant, avantageusement automatiquement, lors du passage de l'organe de préhension 5 par ladite position de capture P_{C}, c'est-à-dire lorsque ledit organe de préhension 5, alors qu'il pivote dans le sens passant S1, en direction du secteur fonctionnel et en provenance de l'extérieur, c'est-à-dire en provenance d'une partie du secteur angulaire principal α₀ située à l'extérieur dudit secteur fonctionnel α_{F} et ne contenant pas la position de capture, atteint et dépasse ladite position de capture, en se rendant ainsi captif du secteur angulaire compris entre ladite position de capture P_{C} et la borne du secteur angulaire fonctionnel qui en est la plus éloignée (dans le sens passant S1), en l'occurrence la position de préhension P_{P} sur les figures.

Avantageusement, le fait de disposer la position de capture en dehors ou en limite du secteur angulaire fonctionnel permet aux moyens de capture de ne pas interférer avec le fonctionnement de la poignée après que celle-ci a été assemblée sur le récipient 2 et que ce dernier est en service, puisque la présence et l'action des moyens de capture 10 ne perturbent pas ledit fonctionnement, et en particulier ne font pas obstacle au basculement alternatif de l'anse 6 entre les positions de rangement et de préhension, et réciproquement.

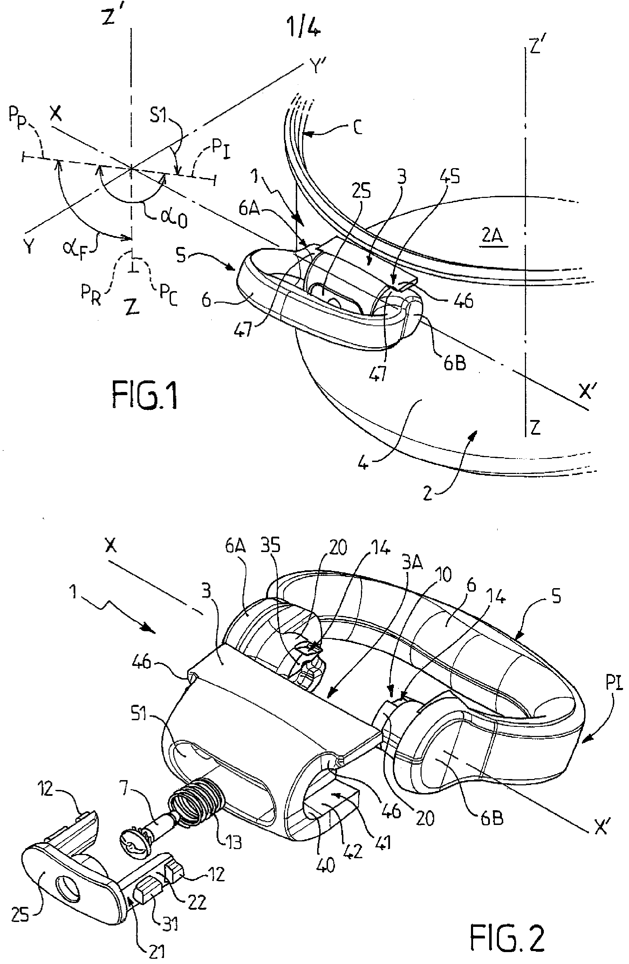

Ainsi, la position angulaire de capture P_{C} forme une position angulaire intermédiaire comprise entre d'une part une position d'introduction P_{I}, représentée notamment sur les figures 2 à 3C, qui est située dans le secteur angulaire principal α₀ à distance des positions angulaires de rangement et de préhension, et d'autre part l'une desdites positions angulaires de rangement P_{R} et de préhension P_{P} qui marque les limites du secteur angulaire fonctionnel α_{F}.

En d'autres termes, le secteur angulaire principal α₀ présente, autour de l'axe de pivotement (XX'), une couverture angulaire strictement supérieure à celle du secteur angulaire fonctionnel α_{F}. Un tel agencement permet d'accueillir initialement l'organe de préhension 5 dans une position angulaire d'introduction P₁ qui est située dans ledit secteur angulaire principal α₀, dont elle peut constituer, par convention, l'une des bornes, mais hors du secteur fonctionnel α_{F}, et plus particulièrement hors du secteur angulaire correspondant à la réunion d'une part dudit secteur angulaire fonctionnel α_{F} et d'autre part, si la position de capture P_{C} n'est pas confondue avec l'une des bornes dudit secteur fonctionnel α_{F}, du secteur angulaire adjacent compris entre la position de capture P_{C} et la limite la plus proche du secteur angulaire fonctionnel, c'est-à-dire entre la position de capture P_{C} et la position angulaire de rangement ou de préhension qui est immédiatement voisine de ladite position de capture P_{C} (en considérant que l'on parcourt le secteur fonctionnel dans le sens passant S1).

De façon particulièrement préférentielle, la position angulaire de capture P_{C} sera comprise dans le secteur angulaire joignant la position d'introduction P_{I} à la position de rangement P_{R}, c'est-à-dire située du côté sensiblement opposé à la position de préhension P_{P} par rapport à ladite position de rangement, le sens passant S1 correspondant alors au sens de manoeuvre permettant de redresser l'organe de préhension 5 de sa position de rangement P_{R} à sa position de préhension P_{P}.

En outre, bien que la position de capture puisse être située en dehors du secteur angulaire fonctionnel, en étant distincte et éloignée des positions de préhension et de rangement, ladite position angulaire de capture P_{C} coïncidera de préférence sensiblement avec la position angulaire de rangement P_{R}.

Avantageusement, les moyens de capture 10 peuvent ainsi fournir, en sus de leur fonction anti-retour qui évite l'extraction accidentelle de la poignée, un indexage fonctionnel de la position angulaire de rangement, ledit indexage étant avantageusement perceptible par l'utilisateur.

En effet, la butée anti-retour procurée pas les moyens de capture 10 peut ainsi constituer également une butée de fin de course à l'encontre du déplacement fonctionnel de l'organe de préhension de sa position de préhension P_{P} à sa position de rangement P_{R}, ladite butée limitant l'amplitude dudit déplacement et indiquant tactilement à l'utilisateur, par la résistance mécanique qu'elle lui oppose en stoppant ledit déplacement, que l'organe de préhension 5 a effectivement atteint la position angulaire de rangement.

En outre, les moyens de capture 10 assurent une certaine stabilité de l'organe de préhension 5 dans la position de rangement P_{R}, en évitant de laisser l'organe de préhension 5 ballotter en suspension libre lorsqu'il se trouve dans ladite position de rangement.

Tel que cela sera détaillé plus bas, ce maintien est assuré au moins dans le sens bloquant S2, mais également de préférence dans l'autre sens passant S1, ce qui empêche l'organe de préhension 5 de se redresser inopinément, par exemple lorsque l'utilisateur incline le récipient 2 pour le ranger ou le laver.

Ainsi, on peut donc assurer, par une structure mécanique commune, d'une part un pré-assemblage sûr de l'organe de préhension 5 sur l'embase 3, et d'autre part un repérage, et de préférence, un maintien, dudit organe de préhension 5 lorsque ce dernier se trouve dans sa position angulaire de rangement P_{R}.

De préférence, les moyens de capture 10 comportent un organe d'encliquetage 11, lequel comprend préférentiellement au moins une première clenche 12 contrainte par un organe de rappel élastique 13, tel qu'un ressort hélicoïdal, à l'encontre d'au moins un premier logement de capture 14, ledit logement de capture 14 présentant de préférence d'une part un épaulement 15 formant une butée d'arrêt à l'encontre de la clenche 12 dans le sens bloquant S2, et d'autre part, à l'opposé dudit épaulement 15, une rampe 16 le long de laquelle la clenche 12 peut circuler dans le sens passant S1.

Avantageusement, le premier logement de capture 14 peut ainsi former un cran d'arrêt unidirectionnel, dans lequel la clenche 12 pénètre de manière irréversible lorsqu'elle franchit le décrochement formé par l'épaulement 15, et dont ladite clenche 12 peut s'extraire, et plus particulièrement être réarmée à l'encontre de l'organe de rappel élastique 13, en empruntant la rampe 16.

Avantageusement, la marche formée par l'épaulement 15 permet avantageusement à la clenche 12 de produire, dans le sens passant S1, un déclic sonore et/ou une sensation tactile qui renseigne l'opérateur quant au bon enclenchement des moyens de capture 10 lors de l'assemblage de la poignée. En outre, il assure en service, dans le sens bloquant S2 contraire, un blocage franc arrêtant le mouvement de rabattement de l'anse 6 lorsque celle-ci revient de sa position de préhension et atteint sa position de rangement.

Par ailleurs, l'organe de préhension 5 est de préférence solidaire d'au moins un, et de préférence de deux tourillons 20 qui autorisent son basculement autour de l'embase de fixation 3.

Avantageusement, un tel agencement permet de conférer à l'organe de préhension 5 une structure monolithique particulièrement compacte, qui facilite l'assemblage et qui présente une bonne robustesse, notamment vis-à-vis des charges et des chocs.

A titre d'exemple préférentiel, le ou les tourillons 20 seront formés par des cylindres de base circulaire faisant saillie vers l'intérieur de l'anse 6 à partir de ses extrémités 6A, 6B.

De préférence, le premier logement de capture 14 est creusé dans ledit tourillon 20.

Le logement de capture 14 pourra notamment être formé par une encoche évidée depuis la surface externe du tourillon, l'épaulement 15 plongeant de préférence selon une direction sensiblement radiale centripète par rapport à l'axe de rotation (XX') matérialisé par ledit tourillon 20, voire marquant un angle aigu par rapport à la tangente au fond de ladite encoche de sorte à constituer une dent inclinée de type rochet, tandis que la rampe 16 prend naissance au fond de ladite encoche pour remonter progressivement, selon un angle d'ouverture obtus, à la fois selon une composante orthoradiale et selon une composante sensiblement radiale centrifuge.

La première clenche 12 peut quant à elle avantageusement être portée par un support mobile 21, lequel est de préférence formé par un coulisseau 22 guidé à translation dans l'embase 3, préférentiellement selon une direction transverse sensiblement rectiligne et radiale à l'axe de basculement (XX').

Par ailleurs, la poignée 1 comporte de préférence un organe de commande 25, du genre bouton-poussoir, qui est distinct de l'organe de préhension 5 et qui permet à l'utilisateur, respectivement à l'opérateur chargé de l'assemblage ou de la réparation du récipient 2, de neutraliser les moyens de capture 10 pour autoriser ledit organe de préhension 5 à franchir lesdits moyens de capture 10 dans le sens normalement bloquant S2.

Avantageusement, une telle disposition permet de rendre, sur commande de l'utilisateur, les moyens de capture 10 réversibles et susceptibles d'autoriser, sous le contrôle de l'utilisateur, le retour de l'organe de préhension 5 dans sa position d'introduction P_{I}, par exemple en vue de son extraction pour son remplacement ou son nettoyage.

Plus particulièrement, l'organe de commande 25 pourra être formé par un bouton-poussoir associé au coulisseau 22, et de préférence fixé en tête de ce dernier, ledit bouton-poussoir apparaissant à travers une fenêtre 51 de sorte à permettre l'enfoncement dudit coulisseau 22 à travers l'embase, à l'encontre de l'organe de rappel élastique 13.

Selon une variante préférentielle de réalisation qui peut constituer une invention à part entière, la première clenche 12 des moyens de capture 10 est également apte à coopérer avec un second logement d'appui 30 pour verrouiller l'organe de préhension 5 dans sa position angulaire de préhension P_{P}, en s'opposant au basculement dudit organe de préhension vers sa position angulaire de rangement P_{R}.

Les moyens de capture 10, et plus particulièrement la clenche 12, peuvent ainsi également former un organe de verrouillage apte à engager l'organe de préhension 5 pour le verrouiller dans sa position de préhension, et ainsi éviter le rabattement accidentel de l'anse 6 vers sa position de rangement P_{R} lorsque l'utilisateur manipule le récipient 2, ladite clenche 12 pouvant ainsi former un organe commun apte à participer d'une part à la capture de l'organe de préhension, et d'autre part à son verrouillage, ou au renforcement de son verrouillage, dans l'une et/ou l'autre de ses positions fonctionnelles.

Avantageusement, le second logement d'appui 30 pourra être creusé dans le tourillon 20, tel que cela est illustré sur les figures.

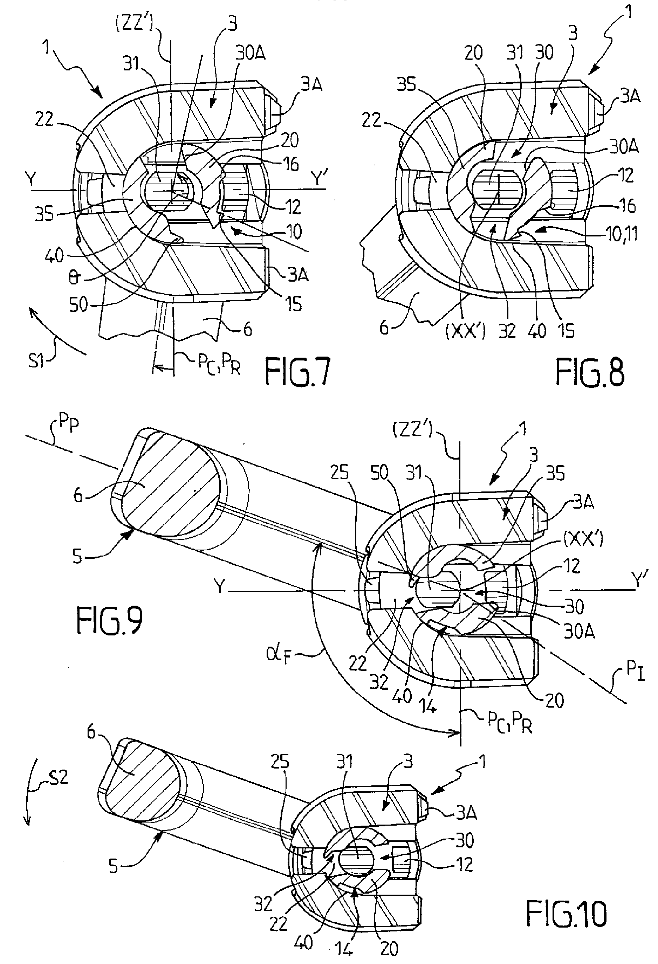

Selon une variante de réalisation, tel que cela est notamment illustré sur la figure 7, le premier logement de capture 14, et plus particulièrement l'épaulement 15, est décalé angulairement, autour de l'axe de pivotement (XX'), d'un angle de décalage θ compris entre 70 degrés et 120 degrés, et de préférence voisin 110 degrés, par rapport au second logement d'appui 30, et plus particulièrement par rapport à la face d'appui 30A de ce dernier contre laquelle la première clenche 12 vient reposer, en appui latéral transverse à sa direction de translation, lorsque l'organe de préhension 5 se trouve en position de préhension P_{P}.

De préférence, la valeur de l'angle de décalage θ séparant l'épaulement 15 de la face d'appui 30A sera sensiblement égale à la couverture angulaire du secteur angulaire fonctionnel α_{F}, la course angulaire permettant à la clenche de passer du premier logement de capture 14 au second logement d'appui 30 coïncidant alors sensiblement avec celle nécessaire à l'anse 6 pour rejoindre sa position de préhension P_{P} en partant de sa position de rangement P_{R}.

Par ailleurs, le support mobile 21 peut également porter une seconde clenche 31, distante de la première clenche 12, et destinée à venir en prise dans un troisième logement d'appui 32 pour verrouiller l'organe de préhension 5 en position de préhension Pp.

Avantageusement, la poignée 1 conforme à l'invention peut donc présenter au moins deux logements d'appui 30, 32 distincts l'un de l'autre et coopérant chacun avec des clenches espacées mais solidaires l'une de l'autre, de sorte à fournir un blocage renforcé en position de préhension.

Avantageusement, la première et la seconde clenche 12, 31 seront formées par des protubérances, de préférence sensiblement parallélépipédiques, faisant saillie du même côté du coulisseau 22, à distance fixe l'une de l'autre.

Selon une caractéristique qui peut constituer une invention en tant que telle, le moyeu du tourillon 20 est de préférence évidé pour former un quatrième logement de dégagement 33 dans lequel la seconde clenche 31 peut se retirer lorsqu'elle se dégage du troisième logement d'appui 32 pour déverrouiller l'organe de préhension 5 et autoriser le basculement de ce dernier vers la position angulaire de rangement.

En d'autres termes, le tourillon 20 est de préférence aménagé pour réserver un logement de dégagement 33 vers l'intérieur duquel la seconde clenche peut opérer un transfert au moins partiel lorsqu'elle est manoeuvrée en retrait par l'organe de commande 25.

A ce titre, il est remarquable que ledit organe de commande 25 est de préférence conçu, et notamment sa course utile dimensionnée, pour provoquer, lorsqu'il est actionné par l'utilisateur, le déplacement du support mobile 21 de sorte à permettre à l'utilisateur de contrôler non seulement la réversibilité des moyens de capture 10 (au moins lorsque l'anse se trouve en position de capture), mais également le déverrouillage de l'organe de préhension 5, lorsque ce dernier se trouve dans sa position angulaire de préhension, afin d'autoriser son passage en position angulaire de rangement.

De préférence, le moyeu est bordé au moins sur une partie de son pourtour par une jante périphérique 35, le tourillon 20 étant ainsi évidé en bout de sorte à pouvoir venir coiffer, un peu à la manière dune cloche, la seconde clenche 31.

Avantageusement, le troisième logement d'appui 32 peut alors être creusé selon une direction radiale centrifuge à partir de la surface radialement interne 35I de ladite jante 35, tandis que le premier logement de capture 14, et/ou respectivement le second logement d'appui 30 peuvent être creusés selon une direction radiale centripète, à partir de la surface radialement externe 35E de ladite jante 35.

A ce titre, il est remarquable que le premier logement de capture 14 est de préférence borgne, tandis que les second et troisième logements d'appui 30, 32 sont de préférence débouchant, de telle sorte que la jante 35 forme une cloison percée séparant la première de la seconde clenche sur les secteurs angulaires autres que ceux occupés par lesdits second et troisième logements d'appui 30, 32.

De préférence, le quatrième logement de dégagement 33 présentera une forme sensiblement circulaire dans laquelle s'inscrit la seconde clenche 31, clenches dont les coins sont de préférence arrondis en conséquence.

En outre, le quatrième logement de dégagement 33 présentera de préférence un renfoncement 36 plus marqué autorisant le débattement de ladite seconde clenche 31, interne, lors de l'encliquetage de la première clenche 12, externe, dans le premier logement de capture 14.

De préférence, le tourillon 20 pourra être fendu en bout par un passage traversant 30, 33, 32 formant le second et le troisième logement d'appui 30, 32.

Plus particulièrement, tel que cela est illustré sur les figures, ledit passage traversant peut être constitué par la succession, en enfilade sensiblement rectiligne, du second logement d'appui 30, du quatrième logement de dégagement 33, et du troisième logement d'appui 32, et être bordé par les portions pleines et sensiblement circulaires de la jante 35.

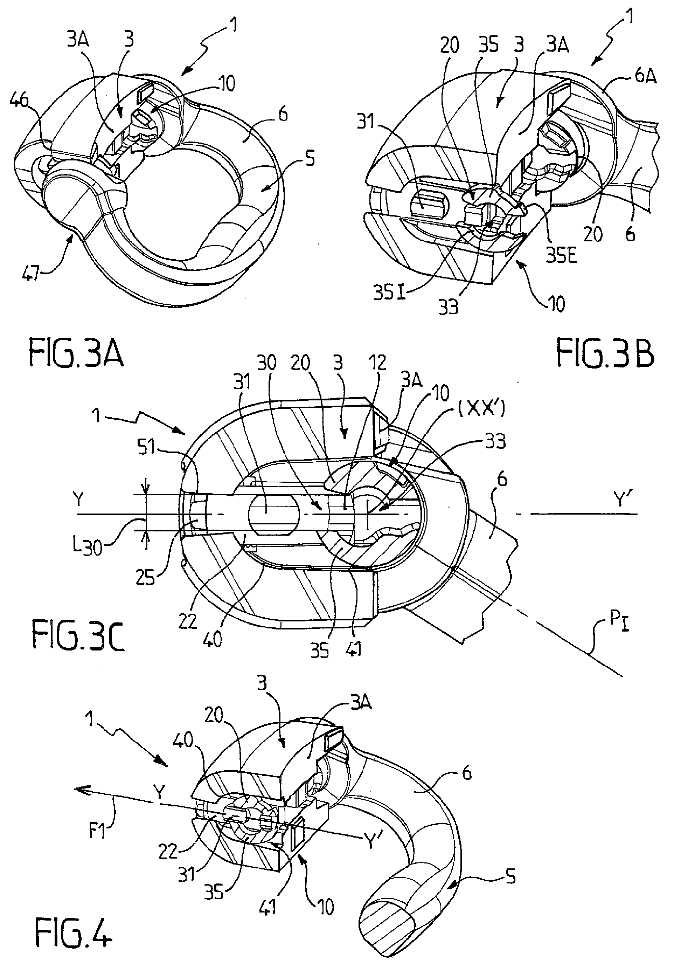

En outre, la largeur L₃₀ du passage traversant 30, 33, 32, et plus particulièrement la largeur du second logement d'appui 30, est de préférence adaptée pour fournir une ouverture suffisante, autorisant la jante 35 du tourillon à franchir successivement la première clenche 12 et la seconde clenche 31, tel que cela est illustré sur les figures 3C et 4, lorsque l'organe de préhension 5 est orienté de telle sorte que la ligne moyenne selon laquelle s'étend ledit passage est sensiblement parallèle à la direction du coulisseau 22.

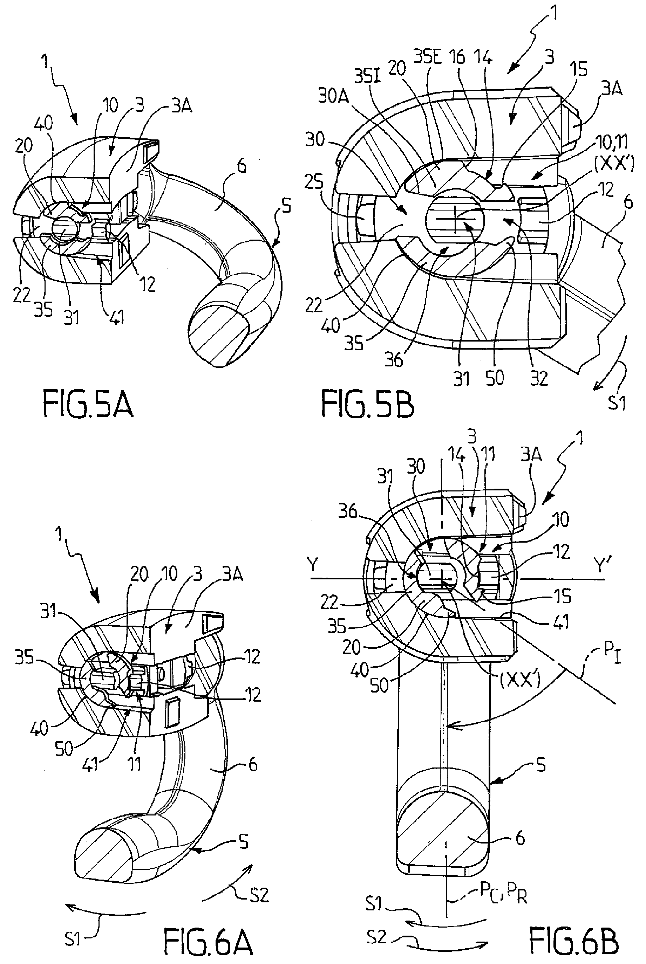

Avantageusement, une telle configuration permet à l'organe de préhension 5, préalablement aligné convenablement dans sa position d'introduction P_{I} (figures 3A à 3C), d'atteindre sa position fonctionnelle au sein de l'embase 3 en étant glissé le long du coulisseau 22, par-dessus les clenches qui traversent la jante 35 à travers le passage traversant (figure 4), jusqu'à ce que le quatrième logement de dégagement 33 vienne se superposer à la seconde clenche 31 (figures 5A, 5B), position à partir de laquelle ledit organe de préhension peut basculer autour de ladite clenche jusqu'à atteindre sa position de capture P_{C} (figures 6A, 6B).

Par ailleurs, l'embase de fixation 3 comporte de préférence au moins un palier 40, de préférence du genre palier lisse, qui guide l'organe de préhension 5, et plus particulièrement le tourillon 20, à rotation.

En outre, ladite embase 3 comporte de préférence au moins une rainure d'accès 41 qui débouche sur l'une des faces de l'embase 3, de préférence sur la face d'appui 3A destinée à être accolée à la paroi 4 du récipient 2, ladite rainure d'accès 41 joignant ladite face au palier 40 de sorte à permettre l'insertion de l'organe de préhension 5 le long de ladite rainure d'accès 41, depuis l'extérieur de l'embase 3 jusque dans ledit palier 40.

De préférence les chants de la rainure d'accès 41 forment des rails de guidage 42 servant de support de glissement au tourillon 20 lors de l'insertion de l'anse 6 dans l'embase 3.

De préférence, ladite rainure d'accès 41 peut se présenter sensiblement sous la forme d'un U taillé dans chaque joue latérale de l'embase 3, dont les branches formant les rails 42 s'ouvrent sur la face d'appui 3A, et dont le fond hémicirculaire permet de guider le tourillon 20 à rotation.

Avantageusement, une telle disposition de la rainure d'accès 41 permet de masquer celle-ci, une fois la poignée 1 assemblée sur le récipient 2, en occultant son ouverture latérale par l'extrémité renflée 6A, 6B de l'anse d'une part, et en cachant l'ouverture d'introduction sur la face d'appui 3A par l'application de l'embase contre la paroi 4 du récipient 2, tel que cela est visible sur la figure 1.

Ceci confère à la poignée 1 un bon aspect esthétique et enveloppe de surcroît le mécanisme interne de la poignée dans une enveloppe de protection qui le protège des salissures, des projections, ou encore des agressions mécaniques extérieures.

Par ailleurs, la poignée 1 présente de préférence une butée de fin de course 45 conçue pour arrêter le mouvement de l'organe de préhension 5 lorsque celui-ci se déplace dans le sens passant S1 et atteint sa position de préhension.

De préférence, ladite butée de fin de course 45 comprend une protubérance 46 ménagée sur la partie haute de l'embase 3, contre laquelle vient buter un épaulement 47 ménagé sur l'organe de préhension 5, et plus particulièrement creusé sur le pourtour externe de l'extrémité 6A, 6B de l'anse 6 formant la racine du tourillon 20.

Avantageusement, une telle butée 45 assure une prise particulièrement stable et solide de l'organe de préhension 5, notamment lorsque l'utilisateur soulève le récipient.

En outre, il est remarquable que l'organe de préhension 5 peut ainsi être verrouillé dans les deux directions de pivotement lorsqu'il se trouve en position de préhension P_{P}, c'est-à-dire à la fois dans le sens de son rabattement vers la position de rangement, grâce aux clenches 12, 31 qui coopèrent avec les parois latérales correspondantes de leurs logements d'appui 30, 32 respectifs, et dans l'autre sens par la butée 45 qui l'empêche de poursuivre son redressement au-delà de ladite position de préhension.

Par ailleurs, le troisième logement d'appui est de préférence pourvu d'un organe de rattrapage de jeu 50, tel qu'une rampe formant un bec disposé à l'extrémité dudit troisième logement d'appui 32 et incliné vers l'intérieur dudit logement par rapport au chant correspondant de la jante 35.

Avantageusement, cet organe de rattrapage de jeu 50 est destiné à coopérer avec la seconde clenche 31, et plus particulièrement à être repoussé par cette dernière pour exercer un moment de verrouillage tendant à forcer la rotation du tourillon 20 dans le sens passant S1, lorsque ladite clenche engage ledit logement d'appui 32. Ainsi, l'organe de préhension 5 se trouve, sous la poussée de ladite seconde clenche 31, elle-même contrainte par l'organe élastique 13, sensiblement plaqué sans jeu contre la butée de fin de course 45.

Avantageusement, cet organe de rattrapage de jeu 50 forme également un moyen d'arrêt limitant la course de la seconde clenche 31, et empêchant ainsi le coulisseau 22 d'être expulsé hors de l'embase 3, à travers le troisième logement d'appui 32, lorsque l'organe de préhension 5 se trouve en position de préhension P_{P}.

De préférence, tel que cela est illustré sur les figures, la poignée 1, et notamment l'embase 3, l'anse 6, et le support mobile 21, présentent sensiblement une symétrie par rapport à un plan sagittal défini d'une part par l'axe vertical ZZ' et d'autre part par le rayon du récipient 2 passant sensiblement par le milieu de l'embase.

A ce titre, l'embase 3 présentera de préférence deux butées de fin de course 45, mais également deux rainures d'accès 41 sensiblement opposées, destinées à accueillir chacun l'un des tourillons 20 disposés en regard l'un de l'autre sur chacune des extrémités 6A, 6B de l'anse 6. Le support mobile 21 possédera alors deux coulisseaux 22 attelés solidairement à une traverse formant la partie apparente de l'organe de commande 25 et portant chacun une paire de première et seconde clenches 12, 31 faisant saillie dans des directions opposées, à gauche et à droite sur la figure 2, et destinées à faire saillie à l'intérieur de chaque rainure d'accès 41 pour venir coopérer avec les logements d'appui et de capture desdits tourillons 20.

Avantageusement, une telle structure qui multiplie, et notamment double, les moyens de capture et de verrouillage permet d'améliorer la robustesse, la stabilité et la fiabilité de fonctionnement de la poignée 1.

Un procédé d'assemblage d'une poignée pivotante 1 conforme à l'invention sur un récipient de cuisine 2 va maintenant être décrit en référence à la variante de réalisation préférentielle représentée sur les figures.

Initialement, les constituants de la poignée 1 sont séparés les uns des autres, tel que cela est illustré sur la figure 2.

Le procédé conforme à l'invention comporte tout d'abord une étape (a) de constitution de poignée pivotante 1, au cours de laquelle on réalise une poignée 1 en montant un organe de préhension 5 sur une embase de fixation 3, de telle sorte que ledit organe de préhension puisse pivoter dans un secteur angulaire comportant au moins un secteur angulaire fonctionnel α_{F} compris entre une première position angulaire de préhension, correspondant à une position dans laquelle l'organe de préhension permet à un utilisateur de manipuler un récipient, et une seconde position angulaire de rangement distincte de la première.

Cette étape (a) de constitution comprend de préférence une sous étape (a0) de mise en place d'un support mobile 21 porteur d'une première et d'une seconde clenche 12, 31, au cours de laquelle l'opérateur chargé de l'assemblage introduit l'organe de commande 25 dans l'embase 3, à travers une fenêtre 51 et à l'encontre de l'organe de rappel élastique 13, jusqu'à ce que la seconde clenche 31 parvienne sensiblement au centre de rotation du palier 40, tel que cela est illustré notamment sur la figure 3C, dans une position précontrainte dans laquelle il est maintenu.

Ladite étape (a) de constitution de poignée comprend de préférence au moins une sous-étape (a1) d'insertion au cours de laquelle on rapporte l'organe de préhension 5 sur l'embase 3, dans une position angulaire d'introduction P_{I} située en dehors du secteur fonctionnel α_{F}.

Plus particulièrement, l'opérateur d'assemblage peut présenter l'anse 6 dans une position d'introduction P_{I} sensiblement renversée, de préférence située sensiblement à l'opposé de la position de préhension P_{P} par rapport à l'axe de pivotement (XX'), de telle sorte que les tourillons 20 se présentent en vis-à-vis des ouvertures des rainures d'accès 41 et peuvent s'engager sur les rails 42.

Avantageusement, la position d'introduction de l'anse 6, ici dans le quadrant inférieur arrière, est déterminée de telle sorte que le passage traversant 30, 33, 32 qui fend le tourillon 20 de part en part selon une direction de préférence sensiblement rectiligne, est aligné avec la direction de déplacement du coulisseau 22, et de façon sensiblement parallèle à la direction des rails 42 de la rainure d'accès 41, tel que cela est illustré sur les figures 3A à 3C.

L'organe de préhension 5, et plus particulièrement les tourillons 20, peuvent ainsi être introduits, puis enfoncés vers l'intérieur de l'embase 3, le long des rails 42, le second logement d'appui se trouvant à la « *proue »* lors de ce mouvement d'enfoncement F1, orienté de l'arrière vers l'avant de l'embase 3, de telle sorte que le tourillon, et plus particulièrement la jante 35 bordant ledit second logement d'appui 30 peut franchir successivement la première clenche 12 (cf. figure 3C) puis la seconde clenche 31 (cf. figure 4), jusqu'à atteindre une position de butée, dans laquelle la surface externe 35E de la jante 35 vient reposer en appui dans le berceau formé par le palier 40 en fond de rainure d'accès 41 (cf. figures 5A et 5B).

Une fois les tourillons 20 logés dans leurs paliers 40, l'anse 6 peut avantageusement basculer autour de l'axe de pivotement (XX'), autour de la seconde clenche maintenue en position à l'aplomb du logement de dégagement 33 par la pression exercée par l'opérateur sur le bouton poussoir 25. Bien entendu, la largeur de la jante 35 est notamment inférieure à l'intervalle de passage ménagé entre la seconde clenche 31, interne, et la première clenche 12, qui reste à l'extérieur de ladite jante.

L'étape (a) de constitution de poignée comporte alors, suite à la sous-étape (a1) d'insertion, une sous-étape (a2) de capture, au cours de laquelle on bascule l'organe de préhension 5 dans un sens passant S1 en direction du secteur angulaire fonctionnel α_{F}, c'est-à-dire dans un sens rétrograde sur les figures 6A et 6B, depuis l'arrière vers l'avant en passant par le point vertical bas correspondant ici à la position de rangement.

Avantageusement, ce basculement se poursuit jusqu'à ce que l'organe de préhension gagne et franchisse une position angulaire de capture P_{C}, elle-même située en limite ou en dehors dudit secteur angulaire fonctionnel α_{F}, et depuis laquelle des moyens de capture 10 empêchent le retour dudit organe de préhension 5, devenu captif sensiblement simultanément au franchissement de ladite position de capture, vers sa position angulaire d'introduction P_{I}.

En d'autres termes, l'opérateur maintient tout d'abord l'organe de commande 25 enfoncé à l'encontre de l'organe élastique 13, de sorte d'une part à éviter son éjection hors de l'embase, et d'autre part à placer l'intervalle séparant les clenches 12, 31 en vis-à-vis de la jante 35, de sorte à autoriser la rotation du tourillon 20, puis fait basculer l'anse 6 de sorte à interposer la portion de jante 35 comprenant le logement de capture 14 entre lesdites première et seconde clenches 12, 31.

Ce faisant il peut relâcher l'organe de commande 25, celui-ci étant désormais maintenu au moins par l'appui de la première clenche 12 contre la surface externe 35E de la jante.

Lorsque l'amplitude du pivotement de l'anse 6 est suffisante pour que l'épaulement 15 du logement de capture 14 franchisse le rebord de la première clenche 12, cette dernière est automatiquement projetée, sous l'impulsion de l'organe élastique 13, au fond dudit logement de capture 14, en créant un déclic sonore, ainsi qu'une sensation de choc tactile qui renseigne l'opérateur sur l'encliquetage.

Simultanément, la seconde clenche 31 opère un déplacement identique qui l'excentre par rapport à l'axe de pivotement (XX') et vient la loger dans le renfoncement 36 prévu à cet effet.

Dans cette position, qui correspond à celle atteinte et illustrée sur les figures 6A et 6B, il n'est plus possible de ramener spontanément l'anse vers sa position d'introduction, le coin et une portion de la face latérale de la première clenche 12 étant en effet retenus par l'épaulement 15. A ce titre, il est remarquable que l'orientation dudit épaulement 15 est de préférence légèrement rentrante, de sorte à offrir à la première clenche 12, lorsque l'anse 6 se trouve en position de capture P_{C}, une surface d'appui sensiblement plane et parallèle à la direction de translation du coulisseau 22, surface d'appui dont la forme et l'orientation sont ainsi sensiblement conjuguées à celles de la paroi latérale de ladite clenche.

Avantageusement, s'il est envisageable que l'organe de préhension 5 puisse librement aller et venir dans les deux sens, et en particulier rebrousser librement chemin, tant qu'il se trouve dans le secteur angulaire situé en amont de la position de capture P_{C}, c'est-à-dire dans l'intervalle [P_{I}; P_{C}[, il n'en est plus ainsi une fois qu'il a franchi la position de capture P_{C} et provoqué le déclenchement des moyens de capture 10, puisque ces derniers restreignent l'amplitude de son débattement angulaire à un secteur angulaire "de captivité" [P_{C} ; P_{P}], délimité d'une part par ladite position de capture P_{C} (que ledit organe de préhension 5 ne peut désormais plus franchir librement dans le sens du retour correspondant au sens bloquant S2) et d'autre part par la borne P_{P} du secteur angulaire fonctionnel qui est la plus éloignée de ladite position de capture (dans le sens passant S1). En d'autres termes, une fois l'organe de préhension 5 engagé dans ledit secteur de captivité, il ne lui est plus possible d'en sortir librement.

Cette étape (a) de constitution permet donc de réaliser un sous-ensemble captif qui regroupe l'embase 3, l'organe de préhension 5, ainsi que les moyens de capture 10 embarqués et les moyens destinés au verrouillage de l'organe de préhension 5 dans sa position de préhension.

Le procédé comporte ensuite une étape (b) d'assemblage sur le récipient, au cours de laquelle l'opérateur rapporte et fixe le sous-ensemble formé par la poignée contre la paroi 4 du récipient 2.

Avantageusement, la disposition de l'anse 6 sensiblement verticale et parallèle à la paroi 4 permet d'approcher la poignée 1 jusqu'à plaquer la paroi d'appui 3A de l'embase contre la paroi 4 du récipient sans que l'anse ne ballotte ni n'interfère avec le récipient 2 lors dudit mouvement d'approche.

En outre, l'anse 6 occupe alors une position, qui correspond de préférence à la fois à sa position de capture et à sa position de rangement, dans laquelle elle dégage totalement l'accès à la vis de fixation 7, et plus permet à un outil approprié de pénétrer sensiblement radialement dans un orifice d'accès percé à travers l'organe de commande 25, en vis-à-vis de ladite vis de fixation 7.

L'opération de report et de fixation de la poignée 1 sur le récipient 2 est donc particulièrement simple, sûre, et reproductible, ce qui permet même d'envisager son automatisation, avec éventuellement approvisionnement de poignées 1 préconstituées.

Une fois la poignée 1, et plus particulièrement l'embase 3 arrimée à la paroi du récipient, l'utilisateur du récipient peut avantageusement commander librement le passage de l'organe de préhension 5 depuis sa position de rangement P_{R} jusqu'à sa position de préhension P_{P}, c'est-à-dire faire parcourir à l'anse 6 un arc de cercle correspondant au secteur angulaire fonctionnel α_{F}, selon une course angulaire coïncidant avantageusement avec celle de l'angle de décalage θ, sans que les moyens de capture 10 ne fassent obstacle à ce déplacement.

Plus particulièrement, lorsque l'utilisateur poursuit la rotation de l'organe de préhension 5 dans le sens passant S1 à partir de la position de rangement, la première clenche 12 est progressivement repoussée par la rampe de réarmement 16, à l'encontre de l'organe de rappel élastique 16 qui la maintient plaquée contre la surface externe 35E de la jante 35, ce mouvement de recul radial se poursuivant jusqu'à ce que ladite première clenche 12 soit extraite du logement de capture 14, tel que cela est illustré sur les figures 7 et 8.

Lorsque l'organe de préhension 5 atteint sa position de préhension P_{P}, les épaulements 47 viennent buter contre les protubérances 46 interdisant la poursuite du mouvement de redressement ascendant.

Simultanément, le second et le troisième logement d'appui 30, 32 viennent se placer dans l'alignement de la trajectoire rectiligne du coulisseau 22, de telle sorte que la première et la seconde clenche 12, 31 pénètre dans lesdits logements, et viennent plus particulièrement en appui contre les chants correspondants de la jante 35 afin d'appliquer à l'organe de préhension 5 un moment de blocage faisant obstacle à son rabattement vers sa position de repos.

De façon particulièrement avantageuse, la seconde clenche 31 poursuit sa course jusqu'à s'engager sur la rampe de rattrapage de jeu 50, en verrouillant ainsi l'organe de préhension 5 de façon particulièrement stable.

On obtient ainsi un verrouillage double, et même quadruple, en position de préhension.

Pour rabattre la poignée, l'utilisateur doit enfoncer l'organe de commande 25 pour manoeuvrer le coulisseau 22, et plus particulièrement les clenches 12, 31 en retrait, afin d'extraire ces dernières de leur logements d'appui 30, 32 respectifs. La poignée peut alors ensuite être rabattue librement, dans un sens correspondant sensiblement au sens bloquant S2, jusqu'à atteindre sa position de rangement P_{R} dans laquelle elle est avantageusement indexée et stabilisée par la première clenche 12 qui réintègre le logement de capture 14.

Grâce à l'épaulement 15, il est toutefois impossible à l'anse 6 de dépasser cette position de rangement. En service, une telle disposition peut notamment assurer le maintien d'une distance minimale de sécurité entre l'anse et la paroi du récipient, en évitant ainsi tout choc, pincement, ou brûlure des doigts de l'utilisateur contre ladite paroi.

La poignée pivotante 1 conforme à l'invention ainsi que son procédé d'assemblage permettent donc de réaliser à moindre coût, à une cadence élevée, et en minimisant les risques d'incident et le taux de rebut des récipients de cuisine 2 particulièrement ergonomiques, robustes et sûrs.

### POSSIBILITE D'APPLICATION INDUSTRIELLE

L'invention trouve son application industrielle dans la conception et la fabrication de poignées pour récipients de cuisine.

## Revendications

1. Poignée pivotante (1) pour récipient de cuisine (2), ladite poignée comprenant une embase de fixation (3) permettant sa fixation sur la paroi (4) du récipient, ainsi qu'un organe de préhension (5) qui est monté sur ladite embase de fixation (3) de sorte à pouvoir pivoter dans un secteur angulaire principal (α₀) contenant au moins un secteur angulaire fonctionnel (α_{F}) compris entre une première position angulaire de préhension (P_{P}), dans laquelle l'organe de préhension (5) permet à un utilisateur de manipuler le récipient, et une seconde position angulaire de rangement (P_{R}) distincte de la première position angulaire, ladite poignée (1) comportant des moyens de capture (10) conçus pour engager l'organe de préhension (5) alors que ce dernier se trouve dans une position angulaire de capture (P_{C}) située en dehors ou en limite du secteur angulaire fonctionnel (α_{F}), lesdits moyens de capture étant agencés pour définir d'une part un sens passant (S1) selon lequel ils autorisent l'organe de préhension (5) à franchir librement la position angulaire de capture (P_{C}) en direction du secteur fonctionnel (α_{F}) et d'autre part un sens bloquant (S2) selon lequel ils empêchent ledit organe de préhension (5) de s'éloigner du secteur fonctionnel au-delà de ladite position angulaire de capture (Pc).

2. Poignée selon la revendication 1 **caractérisée en ce que** la position angulaire de capture (P_{C}) coïncide sensiblement avec la position angulaire de rangement (P_{R}),

3. Poignée selon la revendication 1 ou 2 **caractérisée en ce que** les moyens de capture (10) comportent un organe d'encliquetage (11) comprenant au moins une première clenche (12) contrainte par un organe de rappel élastique (13) à l'encontre d'au moins un premier logement de capture (14) qui présente d'une part un épaulement (15) formant une butée d'arrêt à l'encontre de la première clenche (12) dans le sens bloquant (S2), et d'autre part une rampe (16) le long de laquelle la clenche peut circuler dans le sens passant (S1).

4. Poignée selon la revendication 3 **caractérisée en ce que** la première clenche (12) des moyens de capture (10) est également apte à coopérer avec un second logement d'appui (30) pour verrouiller l'organe de préhension (5) dans sa position angulaire de préhension (P_{P}), en s'opposant au basculement dudit organe de préhension vers sa position angulaire de rangement (P_{R}).

5. Poignée selon l'une des revendications 3 ou 4 **caractérisée en ce que** l'organe de préhension (5) est solidaire de, et de préférence réalisé d'un seul tenant avec, au moins un tourillon (20) autorisant son basculement autour de l'embase de fixation (3) et **en ce que** le premier logement de capture (14), respectivement le second logement d'appui (30), est creusé dans ledit tourillon (20).

6. Poignée selon l'une des revendications 3 à 5 **caractérisée en ce que** la première clenche (12) est portée par un support mobile (21) portant également une seconde clenche (31) distante de ladite première clenche (12) et destinée à venir en prise dans un troisième logement d'appui (32) pour verrouiller l'organe de préhension (5) en position de préhension (P_{P}).

7. Poignée selon les revendications 5 et 6 **caractérisée en ce que** le moyeu du tourillon (20) est évidé pour former un quatrième logement de dégagement (33) dans lequel la seconde clenche (31) peut se retirer lorsqu'elle se dégage du troisième logement d'appui (32) pour déverrouiller l'organe de préhension et autoriser son basculement vers la position angulaire de rangement, et **en ce que** ledit moyeu est bordé au moins sur une partie de son pourtour par une jante périphérique (35), le troisième logement d'appui (32) étant creusé selon une direction radiale centrifuge à partir de la surface radialement interne (35I) de ladite jante, tandis que le premier logement de capture (14), respectivement le second logement d'appui (30), est creusé selon une direction radiale centripète, à partir de la surface radialement externe (35E) de ladite jante.

8. Poignée selon la revendication 7 **caractérisée en ce que** le support mobile (21) est formé par un coulisseau (22) guidé à translation dans l'embase (3) selon une direction transverse sensiblement radiale à l'axe de basculement (XX') et **en ce que** le tourillon (20) est fendu en bout par un passage traversant (30, 33, 32) formant le second et le troisième logement d'appui (30, 32).

9. Poignée selon la revendication 8 **caractérisée en ce que** la largeur (L₃₀) du passage traversant (30, 33, 32) est adaptée pour autoriser la jante (35) à franchir successivement la première et la seconde clenche (12, 31) lorsque l'organe de préhension (5) est orienté de telle sorte que la ligne moyenne selon laquelle s'étend ledit passage traversant est sensiblement parallèle à la direction du coulisseau (22).

10. Poignée selon l'une des revendications 4 à 9 **caractérisée en ce que** le premier logement de capture (14) est décalé angulairement d'un angle de décalage (θ) sensiblement compris entre 70 degrés et 120 degrés, et de préférence voisin de 110 degrés, par rapport au second logement d'appui (30).

11. Poignée selon l'une des revendications précédentes caractérisée en ce l'embase de fixation (3) comporte au moins un palier (40) guidant l'organe de préhension (5) à rotation ainsi qu'au moins une rainure d'accès (41) débouchant sur l'une des faces de l'embase (3), de préférence sur la face d'appui (3A) destinée à être accolée à la paroi du récipient, ladite rainure d'accès (41) joignant ladite face d'appui (3A) au palier (40) de sorte à permettre l'insertion de l'organe de préhension (5) le long de la rainure d'accès (41), depuis l'extérieur de l'embase jusque dans ledit palier (40).

12. Poignée selon l'une des revendications précédentes **caractérisée en ce qu'**elle comporte un organe de commande (25), du genre bouton-poussoir, distinct de l'organe de préhension (5) et permettant à l'utilisateur de neutraliser les moyens de capture (10) pour autoriser ledit organe de préhension à les franchir dans le sens normalement bloquant (S2).

13. Poignée selon les revendications 6 et 12 **caractérisée en ce que** l'organe de commande (25) est conçu pour provoquer le déplacement du support mobile (21) de sorte à permettre à l'utilisateur de contrôler également de déverrouillage de l'organe de préhension (5), afin d'autoriser le passage de ce dernier de sa position angulaire de préhension à sa position angulaire de rangement.

14. Récipient de cuisine, tel qu'un plat, une sauteuse, un faitout, une poêle, une casserole, une marmite ou un autocuiseur, **caractérisé en ce qu'**il est pourvu d'au moins une poignée pivotante selon l'une des revendications 1 à 13.

15. Procédé d'assemblage d'une poignée pivotante (1) sur un récipient de cuisine (2), ledit procédé comportant une étape (a) de constitution de poignée pivotante au cours de laquelle on réalise une poignée (1) en montant un organe de préhension (5) sur une embase de fixation (3) destinée à permettre la fixation de la poignée sur le récipient, de telle sorte que ledit organe de préhension puisse pivoter dans un secteur angulaire contenant au moins un secteur angulaire fonctionnel (α_{F}) compris entre une première position angulaire de préhension (P_{P}), correspondant à une position dans laquelle l'organe de préhension permet à un utilisateur de manipuler le récipient, et une seconde position angulaire de rangement (P_{R}) distincte de la première position angulaire, ledit procédé étant **caractérisé en ce que** ladite étape (a) de constitution de poignée comprend au moins une sous-étape (a1) d'insertion au cours de laquelle on rapporte ledit organe de préhension (5) sur l'embase dans une position angulaire d'introduction (P_{I}) située en-dehors du secteur angulaire fonctionnel (α_{F}), puis une sous-étape (a2) de capture au cours de laquelle on bascule l'organe de préhension (5) dans un sens passant (S1) en direction dudit secteur angulaire fonctionnel, jusqu'à franchir une position angulaire de capture (P_{C}), elle-même située en limite ou en dehors dudit secteur angulaire fonctionnel, et depuis laquelle des moyens de capture (10) empêchent le retour dudit organe de préhension (5) vers sa position angulaire d'introduction (P_{I}).

## Patentansprüche

1. Schwenkgriff (1) für einen Kochbehälter (2), wobei der Griff ein Ansatzstück (3), das seine Befestigung an der Wand (4) des Behälters ermöglicht, und ein Greiforgan (5) aufweist, das an dem Ansatzstück (3) so montiert ist, dass es in einem Hauptwinkelbereich (α₀) schwenkbar ist, der mindestens einen Funktionswinkelbereich (α_{F}) enthält, der zwischen einer ersten Winkelposition des Greifens (P_{P}), in der das Greiforgan (5) einem Benutzer ermöglicht, den Behälter zu handhaben, und einer zweiten Winkelposition des Unterbringens (P_{R}), die sich von der ersten Winkelposition unterscheidet, liegt, wobei der Griff (1) Einrastmittel (10) aufweist, die ausgebildet sind, um in das Greiforgan (5) einzugreifen, wenn sich Letzteres in einer Winkelposition des Einrastens (P_{C}) befindet, die außerhalb oder an der Grenze des Funktionswinkelbereichs (α_{F}) liegt, wobei die Einrastmittel angeordnet sind, um einerseits das Durchlassrichtung (S1) zu definieren, in der sie dem Greiforgan (5) gestatten, die Winkelposition des Einrastens (P_{C}) in Richtung des Funktionsbereichs (α_{F}) ungehindert zu überschreiten, und andererseits eine Sperrrichtung (S2) zu definieren, in der sie das Greiforgan (5) daran hindern, sich von dem Funktionsbereich über die Winkelposition des Einrastens (P_{C}) hinaus zu entfernen.

2. Griff nach Anspruch 1, **dadurch gekennzeichnet, dass** die Winkelposition des Einrastens (P_{C}) im Wesentlichen mit der Winkelposition des Unterbringens (P_{R}) zusammenfällt.

3. Griff nach Anspruch 1 oder 2, **dadurch gekennzeichnet, dass** die Einrastmittel (10) ein Einrastorgan (11) aufweisen, das mindestens einen ersten Riegel (12) aufweist, der durch ein elastisches Rückholorgan (13) gegen mindestens eine erste Einrastaussparung (14) vorgespannt ist, das einerseits eine Schulter (15) aufweist, die einen Endanschlag gegen den ersten Riegel (12) in der Sperrrichtung (S2) bildet, und andererseits eine Rampe (16) aufweist, entlang der sich der Riegel in die Durchlassrichtung (S1) bewegen kann.

4. Griff nach Anspruch 3, **dadurch gekennzeichnet, dass** der erste Riegel (12) der Einrastmittel (10) ebenfalls geeignet ist, mit einer zweiten Auflageaussparung (30) zusammenzuwirken, um das Greiforgan (5) in seiner Winkelposition des Greifens (P_{P}) zu verriegeln, indem es dem Kippen des Greiforgans in Richtung seiner Winkelposition des Unterbringens (P_{R}) entgegenwirkt.

5. Griff nach einem der Ansprüche 3 oder 4, **dadurch gekennzeichnet, dass** das Greiforgan (5) mit mindestens einem Zapfen (20), der sein Kippen um das Ansatzstück (3) gestattet, fest verbunden und vorzugsweise einstückig mit diesem ausgebildet ist, und dass die erste Einrastaussparung (14), beziehungsweise die zweite Auflageaussparung (30), in dem Zapfen (20) eingebracht ist.

6. Griff nach einem der Ansprüche 3 bis 5, **dadurch gekennzeichnet, dass** der erste Riegel (12) von einem beweglichen Träger (21) getragen ist, der zusätzlich einen zweiten Riegel (31) trägt, der von dem ersten Riegel (12) beabstandet ist und dazu bestimmt ist, in eine dritte Auflageaussparung (32) in Eingriff zu gelangen, um das Greiforgan (5) in der Position des Greifens (Pp) zu verriegeln.

7. Griff nach den Ansprüchen 5 und 6, **dadurch gekennzeichnet, dass** die Nabe des Zapfens (20) ausgehöhlt ist, um eine vierte Auflageaussparung (33) zu bilden, in die sich der zweite Riegel (31) zurückziehen kann, wenn er sich von der dritten Auflageaussparung (32) löst, um das Greiforgan zu entriegeln und sein Schwenken in Richtung der Winkelposition des Unterbringens zu gestatten, und dass die Nabe mindestens auf einem Teil ihres Umfangs durch einen Umfangskranz (35) eingefasst ist, wobei die dritte Auflageaussparung (32) in einer zentrifugalen radialen Richtung ab der radial inneren Fläche (35I) des Kranzes eingebracht ist, während die erste Einrastaussparung (14), beziehungsweise die zweite Auflageaussparung (30), in einer zentripetalen radialen Richtung ab der radial äußeren Fläche (35E) des Kranzes eingebracht ist.

8. Griff nach Anspruch 7, **dadurch gekennzeichnet, dass** der bewegliche Träger (21) durch einen Schieber (22) gebildet ist, der in dem Ansatzstück (3) in einer Querrichtung translatorisch geführt ist, die im Wesentlichen radial zu der Schwenkachse (XX') ist, und dass der Zapfen (20) am Ende durch einen Durchgang (30, 33, 32) gespalten ist, der die zweite und die dritte Auflageaussparung (30, 32) bildet.

9. Griff nach Anspruch 8, **dadurch gekennzeichnet, dass** die Breite (L₃₀) des Durchgangs (30, 33, 32) geeignet ist, um dem Kranz (35) zu gestatten, nacheinander den ersten und den zweiten Riegel (12, 31) zu überschreiten, wenn das Greiforgan (5) derart ausgerichtet ist, dass die Mittellinie, entlang der sich der Durchgang erstreckt, im Wesentlichen parallel zu der Richtung des Schiebers (22) ist.

10. Griff nach einem der Ansprüche 4 bis 9, **dadurch gekennzeichnet, dass** die erste Einrastaussparung (14) winkelmäßig um einen Versetzungswinkel (θ), der im Wesentlichen zwischen 70 Grad und 120 Grad liegt und vorzugsweise etwa 110 Grad beträgt, gegenüber der zweiten Auflageaussparung (30) versetzt ist.

11. Griff nach einem der vorhergehenden Ansprüche, **dadurch gekennzeichnet, dass** das Ansatzstück (3) mindestens ein Lager (40), das das Greiforgan (5) in Drehung führt, sowie mindestens eine Zugangsnut (41) aufweist, die auf eine der Seiten des Ansatzstücks (3), vorzugsweise auf der Auflageseite (3A), die dazu bestimmt ist, an der Wand des Behälters anzuliegen, mündet, wobei sich die Zugangsnut (41) derart an die Auflageseite (3A) an dem Lager (40) fügt, dass sie das Einfügen des Greiforgans (5) entlang der Zugangsnut (41) von der Außenseite des Ansatzstücks bis zu dem Lager (40) ermöglicht.

12. Griff nach einem der vorhergehenden Ansprüche, **dadurch gekennzeichnet, dass** er ein Betätigungsorgan (25) von der Art einer Drucktaste aufweist, das von dem Greiforgan (5) verschieden ist und dem Benutzer ermöglicht, die Einrastmittel (10) zu neutralisieren, um dem Greiforgan zu gestatten, es in der normalerweise sperrenden Richtung (S2) zu überschreiten.

13. Griff nach einem der Ansprüche 6 und 12, **dadurch gekennzeichnet, dass** das Betätigungsorgan (25) gebildet ist, um die Verschiebung des beweglichen Trägers (21) derart zu bewirken, dass dem Benutzer ermöglicht wird, auch das Entriegeln des Greiforgans (5) zu steuern, um den Durchgang dieses Letzteren von seiner Winkelposition des Greifens in seine Winkelposition des Unterbringens zu gestatten.

14. Kochbehälter wie eine Schüssel, eine Sauteuse, ein Topf, eine Pfanne, eine Kasserolle, ein Kochtopf oder ein Schnellkochtopf, **dadurch gekennzeichnet, dass** er mit mindestens einem Schwenkgriff nach einem der Ansprüche 1 bis 13 ausgestattet ist.

15. Verfahren zum Montieren eines Schwenkgriffs (1) auf einem Kochbehälter (2), wobei das Verfahren einen Schritt (a) des Bildens des Schwenkgriffs aufweist, während dem ein Griff (1) erstellt wird, indem ein Greiforgan (5) auf ein Ansatzstück (3) montiert wird, das dazu bestimmt ist, das Befestigen des Griffs auf dem Behälter derart zu ermöglichen, dass das Greiforgan in einem Winkeibereich schwenkbar ist, der mindestens einen Funktionswinkelbereich (α_{F}) aufweist, der zwischen einer ersten Winkelposition des Greifens (P_{P}), die einer Position entspricht, in der das Greiforgan einem Benutzer ermöglicht, den Behälter zu handhaben, und einer zweiten Winkelposition des Unterbringens (P_{R}), die sich von der ersten Winkelposition unterscheidet, liegt, wobei das Verfahren **dadurch gekennzeichnet ist, dass** der Schritt (a) des Bildens des Schwenkgriffs mindestens einen Unterschritt (a1) des Einfügens aufweist, bei dem das Greiforgan (5) auf dem Ansatzstück in einer Winkelposition des Einführens (P₁) aufgebracht wird, die außerhalb des Funktionswinkelbereichs (α_{F}) liegt, und dann einen Unterschritt (a2) aufweist, bei dem das Greiforgan (5) in eine Durchlassrichtung (S1) in Richtung des Funktionswinkelbereichs geschwenkt wird, bis eine Winkelposition des Einrastens (P_{C}) überschritten wird, die selbst an der Grenze oder außerhalb des Funktionswinkelbereichs liegt, und von der aus die Einrastmittel (10) das Rückkehren des Greiforgans (5) in Richtung seiner Winkelposition des Einführens (P_{I}) verhindert.

## Claims

1. A pivotally mounted handle (1) for a kitchen receptacle (2), said handle comprising a fastening base (3) enabling it to be fastened to the wall (4) of the receptacle, and a graspable member (5) that is mounted on said fastening base (3) to be pivotable through a main angular sector (α₀) that contains at least an operating angular sector (α_{F}) that extends from a graspable first angular position (P_{P}), in which the graspable member (5) enables a user to handle the receptacle, to a stowage second angular position (P_{R}) that is distinct from said graspable first angular position, said pivotally mounted handle (1) comprising capture means (10) that are designed to engage the graspable member (5) when said graspable member is in a capture angular position (P_{C}) situated outside or on a boundary of the operating angular sector (α_{F}), said capture means being arranged to define firstly a passing direction (S1) in which said capture means allow the graspable member (5) to go freely past the capture angular position (P_{C}) towards the operating sector (α_{F}), and secondly a blocked direction (S2) in which they prevent said graspable member (5) from moving away from the operating sector beyond said capture angular position (P_{C}).

2. A handle according to claim 1, **characterized in that** the capture angular position (P_{C}) substantially coincides with the stowage angular position (P_{R}).

3. A handle according to claim 1 or claim 2, **characterized in that** the capture means (10) include a pawl member (11) that comprises at least a first latch (12) biased by an elastic return member (13) against at least a capture first recess (14) that has firstly a shoulder (15) forming an abutment stopping the first latch (12) in the blocked direction (S2), and secondly a ramp (16) along which the latch can travel in the passing direction (S1).

4. A handle according to claim 3, **characterized in that** the first latch (12) of the capture means (10) is also suitable for co-operating with an abutment second recess (30) for locking the graspable member (5) in its graspable angular position (P_{P}), by opposing pivoting of said graspable member towards its stowage angular position (P_{R}).

5. A handle according to claim 3 or claim 4, **characterized in that** the graspable member (5) is secured to or preferably integral with at least one stub axle (20) allowing it to pivot about the fastening base (3), and **in that** the capture first recess (14), or, respectively, the abutment second recess (30), is provided in said stub axle (20).

6. A handle according to any one of claims 3 to 5, **characterized in that** the first latch (12) is carried by a moving support (21) also carrying a second latch (31) remote from the first latch (12), and designed to come into engagement in an abutment third recess (32) for locking the graspable member (5) in the graspable position (P_{P}).

7. A handle according to claim 5 or claim 6, **characterized in that** the hub of the stub axle (20) is recessed to form a disengagement fourth recess (33) into which the second latch (31) can retract when it is disengaged from the abutment third recess (32) for the purpose of unlocking the graspable member and of allowing it to pivot towards the stowage angular position, and **in that** said hub is edged at least over a portion of its periphery by a peripheral rim (35), the abutment third recess (32) being formed in an outwardly radial direction from the radially inside surface (35I) of said rim, while the capture first recess (14), or, respectively, the abutment second recess (30), is formed in an inwardly radial direction from the radially outside surface (35E) of said rim.

8. A handle according to claim 7, **characterized in that** the moving support (21) is formed by a slide (22) guided in translation in the base (3), in a transverse direction that is substantially radial to the pivot axis (XX'), and **in that** the stub axle (20) is split at the end by a through passage (30, 33, 32) forming the abutment second and third recesses (30, 32).

9. A handle according to claim 8, **characterized in that** the width (L₃₀) of the through passage (30, 33, 32) is adapted to allow the rim (35) to go past the first latch (12) and the second latch (31) in succession, when the graspable member (5) is angularly positioned so that the mean line along which said passage extends is substantially parallel to the direction of the slide (22).

10. A handle according to any one of claims 4 to 9, **characterized in that** the capture first recess (14) is offset angularly by an offset angle (θ) lying substantially in the range 70° to 120°, and preferably lying in the vicinity of 110°, relative to the abutment second recess (30).

11. A handle according to any preceding claim, **characterized in that** said fastening base (3) is provided with at least one bearing (40) that guides the graspable member (5) in rotation, and with at least one access groove (41) that opens out in one of the faces of the base (3), and preferably in the abutment face (3A) designed to be placed in abutment against the wall of the receptacle, said access groove (41) connecting said abutment face (3A) up to the bearing (40) so as to enable the graspable member (5) to be inserted along said access groove (41), from the outside of the base to inside said bearing (40).

12. A handle according to any preceding claim, **characterized in that** it is provided with a control member (25), of the push-button type, that is distinct from the graspable member (5) and that enables the user to neutralize the capture means (10) so as to allow said graspable member to go past them in the normally blocked direction (S2).

13. A handle according to claims 6 and 12, **characterized in that** the control member (25) is designed to cause the moving support (21) to move so as to enable the user also to control unlocking of the graspable member (5), in order to allow it to go from its graspable angular position into its stowage angular position.

14. A kitchen receptacle, such as a dish, a high-sided frying pan, a stewpot, a frying pan, a saucepan, a stockpot, or a pressure cooker, **characterized in that** it is provided with at least one pivotally mounted handle according to any one of claims 1 to 13.

15. A method of assembling a pivotally mounted handle (1) to a kitchen receptacle (2), said method including a step (a) of constituting a pivotally mounted handle, during which a handle (1) is formed by mounting a graspable member (5) on a fastening base (3), designed to enable the handle to be fastened to the receptacle, in such a manner that said graspable member can pivot though an angular sector containing at least an operating angular sector (α_{F}) that extends from a graspable first angular position (Pp), corresponding to a position in which the graspable member enables a user to handle the receptacle, to a stowage second angular position (P_{R}) that is distinct from said graspable first angular position, said method being **characterized in that** the handle-constituting step (a) comprises at least an insertion sub-step (a1) during which the graspable member (5) is mounted on the base, in an insertion angular position (P_{I}) situated outside the operating angular sector (α_{F}), then a capture sub-step (a2), during which the graspable member (5) is pivoted in a passing direction (S1) towards the operating angular sector until it reaches and goes past a capture angular position (P_{C}), itself situated on a boundary or outside said operating angular sector, and from which the capture means (10) prevent said graspable member (5) from returning towards its insertion angular position (P_{I}).
